# EUROPEAN PATENT APPLICATION

(11) **EP 1 258 961 A2**
(43) Date of publication of application: **20.11.2002**
(21) Application number: 02007816.8
(22) Date of filing: 08.04.2002
(51) Int. Cl.: H02G 3/04, H02G 3/06

(54) **Apparatus for shielding conductors from electromagnetic and other interference**

(30) Priority: 15.05.2001 GB 0111838
(71) Applicant: Mita (UK) Ltd., Denbigshire, LL18 5SX (GB)
(72) Inventor: Took, Ian Frank, Bodelwyddan, Denbighshire LL18 5SX (GB)
(74) Representative: Denmark, James

(57) **Abstract**

A means for improving the electronic and electromagnetic isolation characteristics of compartments within cable trunking systems is disclosed. In general, cable trunking is provided in sections having covers which enclose cables disposed in the trunking, and more specifically compartments thereof. The compartments are defined by one or more walls extending upwardly from a base section to which one or more covers is attached one or more covers, said base section having a base to complete the compartment so that cables can be safely contained therein. In general, data cables carrying low voltage signals are prone to electromagnetic interference from power cables, and these two types of cable are commonly disposed in separate compartments within the trunking. To improve the isolation of one compatment from the other, the invention proposes that a metallic plate is disposed adjacent the walls to provide a shielding effect for said data cables, at least a portion of said metallic plate being deformed out of the plane of said plate to provide a contact with which an electrical connection can be made to permit that plate to be electrically connected to an adjacent metallic plate having a similar contact and similarly disposed adjacent one of the walls. In a most preferred embodiment, the walls are provided at their free end with a flange having a depending skirt to define an upper channel, and a rib is provided on the base adjacent the wall where it joins the base to provide a lower channel so that the metallic plates in the form of strips can be slid along and retained within the channels to facilitate compartment isolation quickly and simply.

## Description

This invention is related to apparatus for shielding conductors from electromagnetic and other interference, and more specifically to a means of adapting existing non-metallic trunking sections to provide shielding of very low voltage and/or low current carrying conductors commonly used for the transmission of data signals from electromagnetic interference (EMI) caused by conventional power cables operating at much greater voltages and carrying varying and often much greater currents which are traditionally carried by the same trunking sections.

Although the following description relates exclusively to the shielding of data cables, for example unshielded twisted pair (UTP) cables constructed according to the 10Base-T or 100Base-T specifications, from EMI from adjacent power cables, those skilled in the art will appreciate from the following description that this invention is also useful in providing a means of safely ensuring that long trunking sections are earthed.

It has for some time been realised by those skilled in the art that data cables, and more particularly the signals they carry are prone to interference from surrounding electromagnetic sources, such as the electromagnetic fields which surround power cables. The signals carried by data cables tend to be of very low magnitude which firstly limits their length to around 50-100m because of the resistance of the conductors carrying the signals and secondly increases the susceptibility of those signals to interference with the result that the data which the signals represent is corrupted and requires re-transmission between devices connected at either end of such cables.

Although repeater and amplifier devices are commonly used to overcome the former problem of the limit on the length of data carrying cables, none of the solutions to the latter problem is particularly effective. For example it has in the past been proposed to provide the cables with an electromagnetically shielded coating during their manufacture, but this of course significantly increases the cost per metre of the cable. In any event, in certain countries of the world, the use of shielded data cables has not been generally adopted on account of their cost and the benefit which is commonly perceived as being only marginal, and this is certainly the case at least in the UK where data cabling is usually effected as inexpensively as possible.

The fundamental difficulty with providing effective shielding between power and data cables by other means is that the shielding is most effectively and inexpensively achieved by segregating the power and data cables by a medium which absorbs electromagnetic radiation, and in the simplest case this amounts to a metallic conducting compound or element. However, the vast majority of cable trunking currently being manufactured is of an insulating plastics material and the introduction into trunking carrying power cables of a conducting component or medium other than the cables requires a means of earthing or grounding the trunking sections to render them safe.

For example, shielding has previously been achieved by coating one or more of the compartments of the trunking sections with a Copper or Nickel spray of a desired thickness to effectively shield the cables within the coated compartment from cables in other adjacent compartments. Although such coatings are effective at providing EMI shielding, they significantly increase the cost of trunking in general and furthermore the coatings are generally not sufficiently conductive or capable of being electrically connected between adjacent trunking section to be a viable or safe means of earthing the trunking as a whole. Accordingly, such coatings are only provided on the inner walls of compartments within the trunking which are adapted solely for data cables, and indeed it is not permitted to dispose power cables in such compartments as the exposure of any power conducting cable within the compartment could result in the transfer of a lethal charge to the trunking with obvious consequences.

A yet further previously proposed solution to the problem of providing effective and inexpensive EMI shielding of data cables is to encase one or other of the power and data cables in an aluminium insert sized according to the compartment of the trunking in which it is to be inserted. While such inserts can be manufactured comparatively inexpensively and provide effective shielding of cables within or without the insert while nevertheless being capable of being safely earthed, the fitting of such inserts is a time consuming task which is additional to the installation of the trunking and furthermore they are rarely fitted correctly.

It is a first object of this invention to provide a means of providing effective shielding of data cables laid within trunking from EMI caused by adjacent power or other from other sources which mitigates the abovementioned disadvantages and which can be installed simply and inexpensively in existing trunking sections and which can furthermore be simply connected across joins in adjacent sections of trunking.

In the UK, there is soon to be introduced (within 2001) a British Standard No. BS EN 50174-2 which relates directly to the issue of EMI shielding of cables and other data carrying devices which typically deliver very small magnitude signals between two connected devices representative of the data. Whereas previously it was not mandatory to provide any EMI shielding of data cables, this standard now imposes the restriction on cabling installers thus trunking manufacturers that data cabling and power cabling should be separated by 200mm where no metallic shield is interposed between such cables, by 100mm where a 2mm thick Aluminium plate provides a shielding function between the two cables, and by 50mm where a 1mm thick steel plate separates the cables.

Although this requirement can be met by previously identified shielding solutions, none of these is particularly inexpensive, and none is viable for adapting already existing cabling installations where the cables are disposed within sections of trunking.

It is thus a second object of the invention to provide a metallic shield which can be inserted in trunking sections adapted to receive power and data cables to provide effective shielding of data cables from EMI generated by the flow of current in the power cables, and which can be fitted to and within compartments of said trunking in a manner which allows the shields in adjacent sections of trunking to be easily electrically connected together to provide an effectively continuous conductor within said trunking which can be safely earthed.

According to the invention there is provided a cable trunking system including a base section to which can be attached one or more covers, said base section having a base and at least one wall extending upwardly from said base which defines at least two compartments on either side of said wall with the base and said one or more covers, said one or more compartments being adapted to receive either power or data cables but not both, characterised in that a metallic plate is disposed adjacent said wall to provide a shielding effect for said data cables, said metallic plate at least a portion of which is deformed out of the plane of said plate to permit the electrical connection of that plate to an adjacent metallic plate having a similar deformation.

Preferably, the deformed portion is a tab defined between a pair of substantially parallel spaced slots stamped in the plate in one edge thereof, said tab being sized for reception in a conventional spade type connector by which electrical connection of adjacent metallic plates can be achieved.

Preferably, the metallic plate is 1mm thick and formed from galvanised steel.

Most preferably the metallic plates are stamped along one of their longer edges with a plurality of pairs of slots which thus define a plurality of pairs of tabs periodically spaced along said edge.

In an alternative embodiment, the shorter abutting or proximal edges of adjacent metallic plates in the trunking system may be provided with a single pair of stamped slots to define single tabs on said edges which can be deformed out of the plane of the plates and ultimately be received in spade connectors provided at the end of a conducting wire thus permitting electrical interconnection of said plates.

It is yet further preferable that the plates are secured to the wall faces by means of a double sided adhesive tape, or with any contact or rapidly solidifying adhesive.

Most preferably the wall extending upwardly from the base of said base section terminates in a flange having a depending skirt to one, other or both sides of the wall to define a channel therewith, said wall also forming a channel with a rib formation provided adjacent the wall on the base of the base section whereby opposite edges of the metallic plates can be slidingly received in said channels and the plates can be mounted adjacent the said wall.

According to a second aspect of the present invention there is provided a cable trunking system including a base section to which can be attached one or more covers, said base section having a base and at least one wall extending upwardly from said base which defines at least two compartments on either side of said wall with the base and said one or more covers, said one or more compartments being adapted to receive either power or data cables but not both, said wall terminating in a flange having a depending skirt to one, other or both sides of the wall to define a channel therewith, said wall also forming a channel with a rib formation provided adjacent the wall on the base of the base section, characterised in that opposite edges of a metallic plate for providing a shielding effect for said data cables are received in the channels at the top and base of the wall by virtue of which said plate is slidingly mounted adjacent said wall.

Preferably at least a portion of said metallic plate is deformed out of the plane of said plate to permit the electrical connection of that plate to an adjacent metallic plate having a similar deformation.

Most preferably the electrical connection between adjacent metallic plates is achieved by means of a conducting wire at either end of which is secured a conventional spade connector which can receive the deformed portions of said metallic plates.

In an third aspect of the invention, there is provided a combination of the elements identified in the first and second aspects of the invention above.

In a fourth aspect of the invention there is provided a metal plate for use in the abovementioned trunking system.

It is additionally contemplated by the applicant that the method of improving the electronic and electromagnetic isolation between compartments within cable trunking is also covered by this application, the method including the steps of sliding the metallic plates abovementioned into channels disposed adjacent walls within such trunking, and making electrical connections between adjacent plates as described above.

A specific embodiment of the invention will now be described by way of example with reference to the accompanying diagrams wherein:
Figure 1 shows a perspective view of a base section component of the trunking system having a metal plate disposed adjacent a wall thereof according to the invention,
Figure 1a shows a perspective view of a spade type connection for use in the invention,
Figures 2 and 3 shows schematic end elevations of trunking systems according to the invention,
Figure 4 shows schematically how various section of trunking may be electrically coupled together using the metallic plates, and
Figures 5 and 6 show alternative locations for the tabs defined in the metal plates according to the invention.

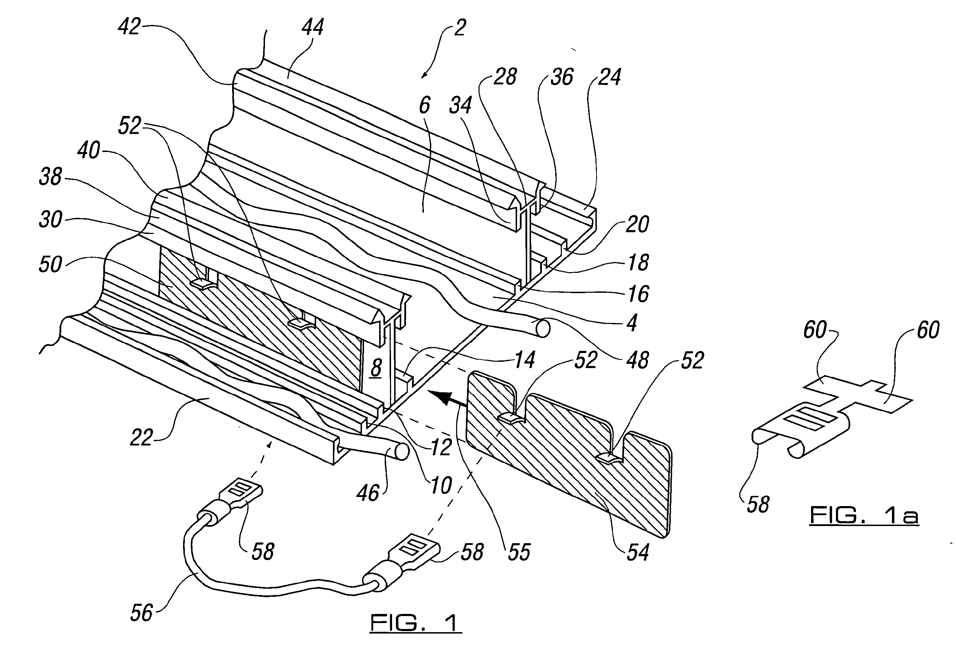

Referring firstly to Figure 1, there is shown a base section 2 of a trunking system having a base 4 on which are provided a pair of upwardly extending walls 6, 8 and a variety of anciallry rib formations 10, 12, 14, 16, 18, 20. At the extremities of the base section 2 are provided a pair of terminal flanges 22, 24 having inwardly disposed hook formations which are used to engage with correspondingly shaped formations on covers (not shown). Additionally, the walls 6, 8 terminate in flanges 28, 26 respectively of greater width than the walls and having depending skirt formations 34, 36 and 30, 32 which together with the surface of the walls define channels in the upper region of the wall and on either side thereof.

Said flanges 26, 28 are furthermore provided with upward extensions 42, 44, and 38, 40 on either side, said extensions terminating in further hooked portions which also engage with corresponding formations on the inside of covers (not shown) to allow for the snap fitting of said covers to the base section.

In the completed assembly, the covers define compartments with the base and the walls, and in the embodiment shown in Figure 1, three such compartments will be defined-two peripheral compartments adjacent the edges of the base section, and a central compartment between the two walls.

A power cable 46 is shown resting in the base between one edge thereof and the wall 8, and a data cable 48 is resting on the base between the two walls 6, 8.

In accordance with the abovementioned and soon to be introduced British Standard, it is required that these cables be 200mm apart where no metallic shielding is required. Very view base sections are even remotely as wide as this, and therefore in accordance with the invention, a metallic plate having upper and lower edges is slidingly mounted adjacent the wall 8 on one or other side thereof. Such mounting is achieved by means of the edges being received in the channels defined between the skirt 30, the rib 12 and the adjacent side of the wall 8. It is to be appreciate that the metal plate can be received in channels on either side of the wall 8.

The said metal plate 50 is provided with a plurality of tabs 52 which are bent out of the plane of the metal plate and provide a means of connecting any metal plate to a further metal plate adjacent same, such as that shown at 54. Such conection is ideally achieved by means of a simple conducting wire 56 provided at either end with spade type connectors 58 which receive the tabs 52 of adjacent plates and frictionally engage therewith to provide a means of electrical connection.

A convention spade type connector is shown at 58 in Figure 1a. The leafs 60 towards the rear of the connector are clamped around the conductor within the wire 56 to secure the connector thereto as is conventional. These type of connectors are ubiquitously available for negligible cost.

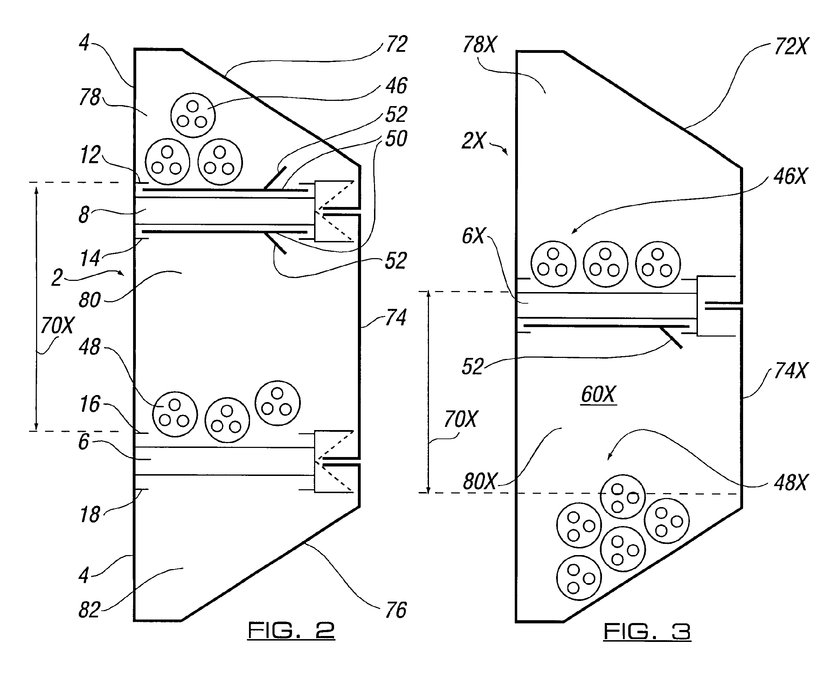

Referring now to Figures 2 and 3 which schematically show the trunking system according to the invention and in which reference numerals corresponding to those used in Figure 1 are used to designate like parts, it can be seen that the base section 2 is rotated through 90° as it is most common for the base section to be mounted to a vertical wall. A plurality of power cables 46 and data cables 48 are shown, and provided that the metal plate 50 (which can be mounted on either side of the wall 8 as shown) is of 1mm thick steel, and the separation distance 70 between the cables 46, 48 is at least 50mm, then the new standard can be complied with.

Additionally, in Figure 2, covers 72, 74, 76 are shown as defining compartments 78, 80, 82 and which complete the trunking system covering the cables 46, 48 disposed in the compartments 78, 80, and the base 4 in each of these compartments.

In Figure 2, a base section 2X is shown from which only a single wall 6X extends upwardly so that only two compartments 78X and 80X are defined behind covers 72X and 74X. In all other respects, the sections of Figures 2 and 3 are identical and shield power and data cables 46X and 48X respectively from one another.

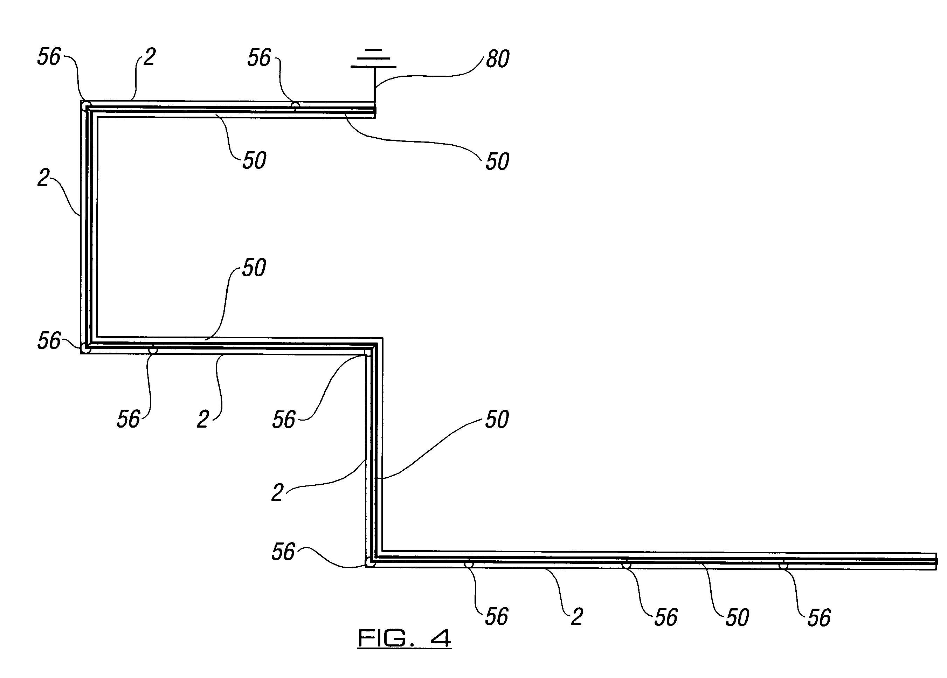

Referring to Figure 4 a trunking system consisting of a plurality of adjacently mounted base sections 2 is shown and within which a plurality of metal plates 50 are electricall connected together by electrical conductors 56 as previously described. At one end of a terminal metal plate in the system, or indeed at any desired point in the system, and earth connection 80 is made to ensure that in the event of any of the plates within the system being contacted with a exposed live power cable, the charge is earthed and the system is rendered safe.

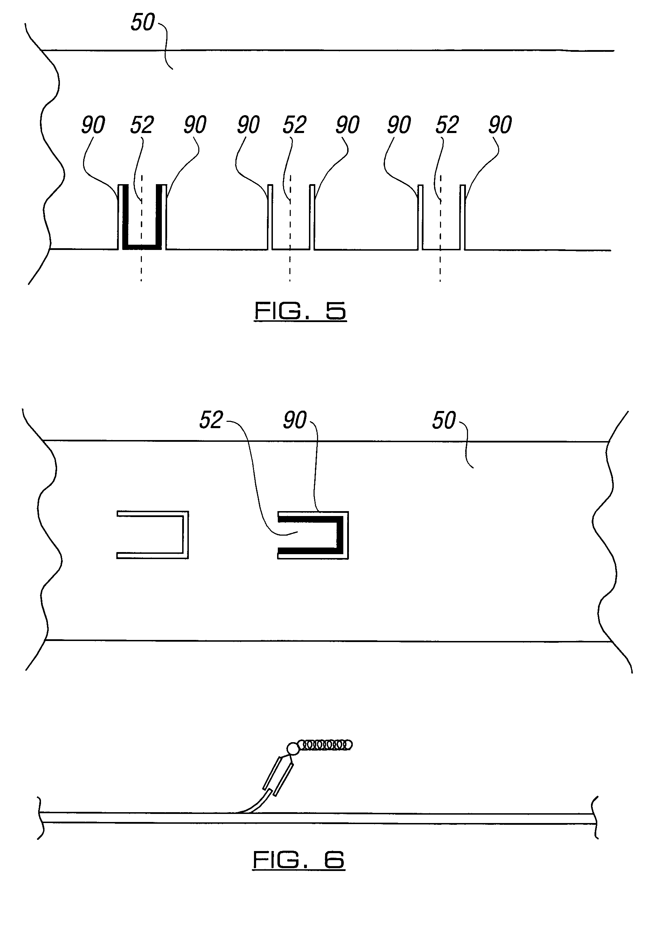

Finally, as can be seen from Figure 5, it is possible to provide the tabs by stamping or punching a pair of spaced parallel slots 90 which define tabs 52 along one of the longer edges metal plate 50 and then subsequently deforming the tabs 52 out of the plane of the metal plate, or alternatively as shown in Figure 6, the tabs may be formed by punching a single U-shaped slot in the body of the metal plate and then deforming the tab thus defined from the plane of the metal plate. Of course, the tabs may also be provided on the shorter abutting edges of metal plates, such as would abut when the two plates 50 shown in Figure 1 were slid together as shown by arrow 55 in that Figure.

In summary therefore, a means for improving the electronic and electromagnetic isolation characteristics of compartments within cable trunking systems is disclosed. In general, cable trunking is provided in sections having covers which enclose cables disposed in the trunking, and more specifically compartments thereof. The compartments are defined by one or more walls extending upwardly from a base section to which one or more covers is attached one or more covers, said base section having a base to complete the compartment so that cables can be safely contained therein. In general, data cables carrying low voltage signals are prone to electromagnetic interference from power cables, and these two types of cable are commonly disposed in separate compartments within the trunking. To improve the isolation of one compatment from the other, the invention proposes that a metallic plate is disposed adjacent the walls to provide a shielding effect for said data cables, at least a portion of said metallic plate being deformed out of the plane of said plate to provide a contact with which an electrical connection can be made to permit that plate to be electrically connected to an adjacent metallic plate having a similar contact and similarly disposed adjacent one of the walls. In a most preferred embodiment, the walls are provided at their free end with a flange having a depending skirt to define an upper channel, and a rib is provided on the base adjacent the wall where it joins the base to provide a lower channel so that the metallic plates in the form of strips can be slid along and retained within the channels to facilitate compartment isolation quickly and simply.

## Claims

1. A cable trunking system including a base section to which can be attached one or more covers, said base section having a base and at least one wall extending upwardly from said base which defines at least two compartments on either side of said wall with the base and said one or more covers, said one or more compartments being adapted to receive either power or data cables but not both, **characterised in that** a metallic plate is disposed adjacent said wall to provide a shielding effect for said data cables, at least a portion of said metallic plate being deformed out of the plane of said plate to provide a contact with which an electrical connection can be made to permit that plate to be electrically connected to an adjacent metallic plate having a similar contact.

2. A cable trunking system according to claim 1 **characterised in that** the contact prior to being deformed from the plane of the metallic plate is a tab defined between a pair of substantially parallel spaced slots stamped in the plate in one edge thereof, said tab being sized for reception in a conventional spade type connector by which electrical connection of adjacent metallic plates can be achieved.

3. A cable trunking system according to either claim 1 or claim 2 **characterised in that** the metallic plate is 1mm thick and formed from galvanised steel.

4. A cable trunking system according to claim 2 or 3 when dependent on claim 2 **characterised in that** the metallic plate is stamped along one of its longer edges with a plurality of pairs of slots which thus define a plurality of tabs periodically spaced along said edge.

5. A cable trunking system according to claim 2 or 3 when dependent on claim 2 **characterised in that** the shorter abutting or proximal edges of adjacent metallic plates in the trunking system may be provided with a single pair of stamped slots to define single tabs on said edges which can be deformed out of the plane of the plates and ultimately be received in spade connectors provided at the end of a conducting wire thus permitting electrical interconnection of said plates.

6. A cable trunking system according to any preceding claim **characterised in that** the metallic plates are secured to the wall faces by means of any of
- a double sided adhesive tape,
- any contact or rapidly solidifying adhesive.

7. A cable trunking system according to any of claims 1-5 **characterised in that** the wall extending upwardly from the base of said base section terminates in a flange having a depending skirt to one, other or both sides of the wall to define a channel therewith, said wall also forming a channel with a rib formation provided adjacent the wall on the base of the base section whereby opposite edges of the metallic plates can be slidingly received in said channels and the plates can be mounted adjacent the said wall.

8. A cable trunking system including a base section to which can be attached one or more covers, said base section having a base and at least one wall extending upwardly from said base which defines at least two compartments on either side of said wall with the base and said one or more covers, said one or more compartments being adapted to receive either power or data cables but not both, said wall partly defining at least one channel either at its free end by means of a flange proximate said free end from which depends a skirt to one, other or both sides of the wall, or at the end of said wall which is joined to the base by means of an adjacent rib formation provided on said base running parallel with said wall, **characterised in that** at least one of the edges of a metallic plate for providing a shielding effect for said data cables is received in the channel partly defined by said wall proximate its free end or the end where it joins the base such that said metallic plate is at least partially retained in adjacent relationship with said wall.

9. A cable trunking system according to claim 8 **characterised in that** channels are provided both proximate the free end of the wall and proximate the end of said wall where it joins the base, the adjacent relationship of said metallic plate with said wall being ensured by means of its opposite edges being retained in said channels.

10. A cable trunking system according to claim 9 **characterised in that** at least a portion of said metallic plate is deformed out of the plane of said plate to permit the electrical connection of that plate to an adjacent metallic plate having a similar deformation.

11. A cable trunking system according to claim 10 **characterised in that** the electrical connection between adjacent metallic plates is achieved by means of a conducting wire at either end of which is secured a conventional spade connector which can receive the deformed portions of said metallic plates.

12. A method of improving the electronic and electromagnetic isolation between compartments within a cable trunking system which includes a base section to which can be attached one or more covers, said base section having a base and at least one wall extending upwardly from said base which defines at least two compartments on either side of said wall with the base and said one or more covers, said wall partly defining at least one channel either at its free end by means of a flange proximate said free end from which depends a skirt to one, other or both sides of the wall, or at the end of said wall which is joined to the base by means of an adjacent rib formation provided on said base running parallel with said wall, **characterised in that** the method includes the steps of sliding a metallic plate in the form of a strip substantially the same height as the wall alongside said wall with at least one edge of said strip disposed in one of the channels defined adjacent the wall, and electrically connecting a second adjacent metallic plate to said first plate by means of a simple conductor being provided with spade connectors which frictionally receive tabs deformed out of the plane of both metallic plates, said tabs being disposed proximate the ends of said metallic pates.

13. A method according to claim 12 **characterised in that** channels are defined proximate both the free end of the wall and the end which is joined to the base, the sliding of said metallic plate being conducted with opposite edges of said plate being received in channels.
